# EUROPEAN PATENT APPLICATION

(11) **EP 4 760 254 A1**
(43) Date of publication of application: **17.06.2026**
(21) Application number: 24219498.3
(22) Date of filing: 12.12.2024
(51) Int. Cl.: G01N 29/14, G01N 29/44, G01N 29/46

(54) **A PROCESS FOR DETERMINING PROCESS CHANGES IN A MULTIPLE-PHASE FLOW IN AN APPARATUS**

(71) Applicant: BASF SE, 67056 Ludwigshafen am Rhein (DE)
(72) Inventor: Metzen, Bernd, 67056 Ludwigshafen am Rhein (DE); Stempel, Anne Katrin, 67056 Ludwigshafen am Rhein (DE); Knoesche, Carsten, 67056 Ludwigshafen am Rhein (DE); Schuhmann, Roland, 67056 Ludwigshafen am Rhein (DE); Strzys, Martin Peter, 67056 Ludwigshafen am Rhein (DE)
(74) Representative: Kudla, Karsten

(57) **Abstract**

The invention relates to a process for determining process changes in a multiple-phase flow in an apparatus, comprising:
(a) obtaining data by capturing measured values by measuring structure-borne sound in the apparatus at different positions on an outer shell of the apparatus and optionally processing the measured values;
(b) comparing the data obtained in step (a) with stored data or feeding the data obtained in step (a) into a machine learning classification method which was taught with data obtained by capturing measured values by measuring the structure-borne sound and optionally processing the measured values and connected operation conditions; and
(c) providing a signal, if a deviation between the data obtained in step (a) and the stored data exceeds a predefined threshold value or if a process change is detected by the machine learning classification method.

## Description

The invention relates to a process for determining process changes in a multiple-phase flow in an apparatus.

Multiple-phase flows, particularly two-phase flows are very common in a large number of industrial processes. Such processes include for example chemical reactions, distillation processes, evaporation or condensation processes. Depending on the components in the multiple-phase flow and the kind of operation carried out in the apparatus, process changes may occur, for example due to fouling in the apparatus, blocking of valves or openings or sedimentation of solid by-products formed in a chemical reaction or based on different physical behavior of the components like heat of evaporation or molecular weight.

Presently, it is common to measure pressures in the apparatus, usually at a feeding point of components fed into the apparatus and at a withdrawal point at which the components are withdrawn from the apparatus. The pressure difference corresponds to the pressure drop in the apparatus. Particularly if valves or openings in the apparatus are blocked or if the cross sectional area is reduced due to fouling on the inner walls of the apparatus, the pressure drop increases. This increase of the pressure drop usually is a first indication that there are unintended process changes in the apparatus. However, as the pressure drop is measured along the whole apparatus, changes in the pressure drop cannot give any hint on the location of possible blockings or fouling and on the reason for the pressure change.

EP-B 1 646 864 describes a process for monitoring health of fixed equipment in an industrial process by measuring a noise signal. In the process, a noise signal is measured with an acoustic sensing device. Acoustic patterns associated with vortices are separated from process noise in the measured noise signal, a process value based on the acoustic pattern and a noise signature based on the process noise are calculated and the noise signature is compared to a stored reference signature. Further, a flow measurement signal is transmitted to a control center and an alarm indication is added onto the flow measurement signal for transmission to a control center, if the noise signature deviates from the stored reference signature by more than a predetermined limit. For receiving signals, according to EP-B 1 646 864, it is necessary that noise is generated either by the flow, for example due to vortexes in the flow, process noise which is generated from the equipment used in the process or noise which is generated by a noise generator. Further, the acoustic detector is placed on a pipe close to fixed equipment, so that it may be possible to detect blockages, fouling or corrosion, but not the position of the respective incident.

A process for detecting a bubble size distribution in a liquid is described in DE-A 10 2012 213 029. Here, a noise detector is used to measure an acoustic signal. From the acoustic signal a frequency distribution is determined from which the bubble size distribution is deduced. In this case, parameters of a two-phase flow are gathered but the process is not suitable for detecting process changes for example due to blockings or fouling.

Therefore, it is an object of the present invention to provide a process for determining process changes in a multiple-phase flow which allows measurement from the outside of the apparatus and by which the location and, preferably, also the kind of process change can be determined.

This object is achieved by a process for determining process changes in a multiple-phase flow in an apparatus, comprising:
(a) obtaining data by capturing measured values by measuring structure-borne sound in the apparatus at different positions on an outer shell of the apparatus and optionally processing the measured values;
(b) comparing the data obtained in step (a) with stored data or feeding the data obtained in step (a) into a machine learning classification method which was taught with data obtained by capturing measured values by measuring the structure-borne sound of the apparatus or another similar apparatus and optionally processing the measured values and connected operation conditions; and
(c) providing a signal, if a deviation between the data obtained in step (a) and the stored data exceeds a predefined threshold value or if a process change is detected by the machine learning classification method.

Measuring structure-borne sound has the advantage that it is not necessary to insert sensors into the apparatus but that the sensors can be placed on the outer wall of the apparatus or on a support structure, preferably a metallic support structure, which is fixed on the outer wall of the apparatus. Further, surprisingly it has shown that by measuring the structure-borne sound at different positions on the outer shell of the apparatus it is possible to localize the position of the incident from which the process change results.

Process changes which can be determined with the inventive process for example are caused by fouling or deposits on the inner wall of the apparatus or on trays, blocking of at least one valve or at least one opening, blockings of structured or random packings, variations in the amount of one phase in the two-phase flow and/or in the amount of the two-phase flow.

For measuring the structure-borne sound, sensors are placed at different positions on the outer shell of the apparatus. The sensors may be installed permanently or may be placed on the outer shell of the apparatus when measurements of the structure-borne sound are taken. To allow comparison with the stored data, the sensors are placed at predefined positions on the outer shell of the apparatus. Particularly if the sensors are not installed permanently, it is necessary to place the sensor for each measurement at essentially the same position. In this case "essentially the same position" means an area of not more than 400 cm² around the position at which the stored data are measured, preferably an area of not more than 200 cm² around the position at which the stored data are measured and particularly an area of not more than 100 cm² around that position at which the stored data are measured. Here the position at which the stored data are measured defines the center of the area.

To allow localization of possible process changes, it is preferred to place the sensors consecutively in flow direction of the multiple-phase flow on the outer shell of the apparatus. Thereby it is possible to place all sensors in one row parallel to a central axis of the apparatus or at different radial positions. It is only important that each sensor is placed at essentially the same position for each measurement unless the sensor is not installed permanently on the outer shell of the apparatus.

Suitable sensors for measuring the structure-borne sound are any sensors by which can gather vibrations in the shell of the apparatus. Preferably, acceleration sensors which are able to measure accelerations in all three dimensions are used for measuring the structure-borne sound. Suitable sensors for example are industrially used standard acceleration sensors, or vibration velocity sensors.

In a typical acceleration sensor, which may be used for measuring the structure-borne sound, an alternating voltage is generated by the structure-borne sound and the alternating voltage subsequently is digitalized by electronic measuring equipment and may be provided for further evaluation. In the context of the present invention, the term "measured with the sensors" refers to capturing values and subsequent digitalization by electronic measuring equipment to obtain data which can be further processed and evaluated.

Data of the structure-borne sound obtained by measuring with the sensors and optionally subsequent data processing are particularly amplitudes and frequencies. Further processing of the measured data is particularly necessary if acceleration sensors are used for capturing values. It is particularly preferred that frequency bands in a defined frequency range are measured. Particularly preferably, the sampling frequency should be 25600 Samples/second to achieve a frequency range of the spectrum of 10 kHz. The measurement duration should be long enough to get a good frequency resolution in the frequency spectrum. In special cases, where the structure-borne noise has to be analyzed in a lower frequency range, adjustments in sampling rate, frequency range and resolution have to be made. In case significant structure-borne noise is in a higher frequency range the sampling rate and frequency range have to be increased accordingly.

To achieve data which are easier to compare, it is preferred to perform a time signal analysis and calculate characteristic values from the raw data measured with each sensor. Such characteristic values for example are Kurtosis factor, skew factor, crest factor, a peak to peak value or an RMS value. Particularly preferred, the peak to peak value is used as characteristic value for comparison. Further, it is preferred, that the characteristic values are evaluated in different frequency ranges.

In this context it is obvious that also the stored data are the corresponding characteristic values to be comparable with the data which were obtained by sampling and subsequent time signal analysis for calculating the characteristic values.

As an alternative or additionally, the data measured with each sensor may be processed by a Fourier Transformation, for example Fast Fourier Transformation (FFT) to obtain frequency time spectrograms from the raw data measured by each sensor.

The data obtained in step (a), preferably the characteristic values or the frequency time spectrograms which may be obtained by Fourier Transformation, particularly by FFT, and the stored data may be compared by conventional methods. In this case, threshold values are defined such that typical deviations during normal operation do not result in the provision of a signal in step (c). To minimize the risk to obtain false reports, it is further preferred to use average values of at least two measurements. In this case, it is preferred that the stored data and/or the data obtained in step (a) are average values of at least two measurements, more preferred of at least 10 measurements and particularly of at least 100 up to 1000 measurements. Using average values for comparison has the additional advantage that it is possible to define smaller limits as threshold values and, thus, already getting a signal at smaller deviations from the normal operation.

Particularly preferably, average values are used if the data obtained in step (a) are compared with stored data. In this case it is further preferred if the stored data are average values of at least two measurements and the data obtained in step (a) also are average values of at least two measurements. If the stored data and the data obtained in step (a) are frequency time spectrograms, it is preferred that the spectrograms are smoothed, particularly preferably, the spectrograms are smoothed by sliding-window-average. By using average values or smoothed spectrograms for the stored data and the data obtained in step (a), the risk of obtaining false reports due to incorrect measurements is further reduced, because in this case the risk of false stored data due to incorrect measurements as well as an incorrect determination of process changes due to incorrect measurements of the structure-borne sound is minimized.

As long as no process changes are determined from the comparison of the data obtained in step (a) with the stored data, it is possible to use the respective measurement of the structure-borne sound as an additional measurement at normal operation and calculate a new average value for the stored data including this measurement or the average values of the measured structure-borne sound, if average values are used for the comparison.

In a preferred embodiment, the data obtained from the sensors, either the raw data or preferably the data obtained by time signal analysis or FFT are used as teaching data for the machine learning classification method. In this case it is particularly preferable to provide data at different operation conditions and use not only the data obtained by capturing measured values by measuring the structure-borne sound and optionally processing the measured values but also the operation conditions connected to the data obtained by measuring and optionally processing the measured values. By using these connected data it is possible to teach the machine learning classification method in such a way that by feeding newly measured data into the machine learning classification method a specific signal can be given which not only shows that there is a change in process but also what kind of change, for example blocking of a valve or fouling on an inner wall of the apparatus and possibly even in which intensity or at which position.

If a machine learning classification method is used, the data used for teaching may be obtained from sensors on the same apparatus in which the process changes are to be determined or, alternatively, on a different but similar apparatus. If the data used for teaching are obtained on a different apparatus, it may be necessary to retrain the machine learning classification method with data obtained on the apparatus in which process changes are to be determined. However, ideally, no retraining or only a little retraining might be necessary when the data are obtained by using a different but similar apparatus.

The machine learning classification method used in the inventive process may be for example any neural network known to the skilled person and being generally referred to as artificial intelligence (Al). A suitable machine learning classification method for example is the method of classification via logistic regression (glm). With the method of classification via logistic regression for the measurements covering different operating modes, single models for each sensor are built and trained. With the algorithm found by the method the point of a defined process change can be identified. Further suitable machine learning methods for example are principal component analysis (PCA), one-class support vector machines (OC-SVM), or recurrent neural network (RNN). However, it has shown that glm which has lower requirements to processing power provides sufficiently good results and has the advantage that it provides the importance of the variables used for classification (Information of variable importance (VI)).

The data used in the machine learning classification method preferably are the data obtained by FFT from the measured structure-borne sound.

For determining deviations from normal operation conditions, it is preferred that the stored data are data obtained during regular operation of the apparatus. Even during normal operation deviations may occur. By measuring during normal operation, these deviations are captured and can be used as training data for the machine learning classification method.

If it is, however, intended to not only determining deviations from normal operation but also determining the kind of deviation and, if possible, also the location that caused the deviation, it may be preferred to use training data which include the locations of the sensors used for measuring the data, the location where the deviation from normal operation is caused and the kind of deviation besides the data captured at normal operation conditions.

Independently of whether the training data are captured only during normal operation of the apparatus or training data are used which additionally include information regarding the location at which process changes take place and of which kind the process changes are, it is particularly preferred that the data obtained in step (a) and the stored data are frequency time spectrograms determined by Fast Fourier transformation of the measured data. If the training data used for teaching the machine learning classification method, the stored data additionally may include the information of the kind of deviation from normal operation and/or the data of the location at which the process change takes place besides the frequency time spectrograms. In this case, frequency time spectrograms of normal operation include the additional information, that this frequency time spectrogram shows data of normal operation. Further, additional data measured in the apparatus, for example pressure, particularly pressure differences, temperature, flow velocities or flow rates additionally may be used for to detect the process changes.

Differences between the stored data and the data obtained in step (a) may be for example differences in frequency or in amplitude of the measured signals. These may be determined for example by comparing the frequency time spectrograms obtained by FFT, for example by shifting of characteristic values in the frequency time spectrogram. If data are known for specific process changes, it is possible to store the data for the specific process changes to determine the kind of process change. If, on the other hand, the kind of process change may be determined by the kind and/or magnitude of deviation, it is sufficient to compare the data obtained in step (a) with the stored data obtained during normal operation and to determine the kind of process change depending on the kind and/or magnitude of deviation of the data obtained in step (a) from the data obtained under normal operation.

As soon as a deviation between the data obtained in step (a) and the stored data is determined, and the deviation exceeds a predefined threshold or as soon as a process change is detected by the machine learning classification method, a signal is provided.

The signal provided may depend on the detected process change or the size of the deviation and may be for example a visible or audible signal like a warning light or a warning sound. If a specific kind of process change is determined, it is further possible to display the specific kind of the process change and, if the position of the cause for the process change, for example the location of a blocked valve or a blocked opening or of a deposit on a wall or tray, also can be determined, it is preferred to also display the location of the cause for the process change. The specific kind of process change and/or the location of the cause for the process change may be displayed on any display known to a skilled person, for example a computer monitor.

After a signal was provided that a process change occurred, depending on the kind of process change measures may be taken. Such measures taken may be for example increasing or reducing feed streams, shutting down the process, increasing or reducing temperature or pressure in the apparatus or restart the process.

The apparatus in which the process change is determined by the inventive process may be for example a column, a jet loop reactor, a flash drum, a condenser, a reboiler or a pump. Columns for example may be columns with internals or without internals, particularly with internals like trays or packings. Such columns for example are distillation columns.

The multiple-phase flow may be any multiple phase flow, for example a flow that contains at least two liquid phases or that contains at least one liquid phase and at least one gas phase, or a flow that comprises a liquid phase and a solids phase, for example polymers that formed for example as by-products in a chemical reaction or by precipitation or fouling. In the last case, the process may be used for detecting the solids.

Preferably, the multiple-phase flow is a two-phase flow comprising a gas phase and a liquid phase. The phases of the multiphase flow may flow in co-current or in counter-current. Particularly if the multiphase-flow is a two-phase flow comprising a liquid phase and a gas phase, it is possible that liquid phase and gas phase flow in co-current or in counter-current. Particularly in distillation columns the gas phase and the liquid phase flow in counter current.

Embodiments of the invention and examples are shown in the figures and explained in more detail in the following description:

In the figures:
Figures 1a and 1b show schematically a column with packings and positions of sensors in longitudinal section and cross section;
Figures 2a to 2d show schematically a column with trays and positions of sensors in longitudinal section and cross sections at different positions;
Figures 3a and 3b show schematically a jet loop reactor with positions of sensors in longitudinal section and cross section;
Figure 4 shows examples of measurement signals for different liquid loads;
Figures 5a and 5b show examples for signals with tolerance limits obtained by machine learning process;
Figure 6a shows the spectral analysis of a first sensor of the column of figure 4;
Figure 6b shows the spectral analysis of a second sensor of the column of figure 4;
Figure 7a shows a diagram of the spectral analysis classification model;
Figure 7b shows a diagram of the spectral analysis classification model with sensitivities;
Figures 8 and 9 show spectral properties of the first sensor of the jet loop reactor,
Figure 10 shows a frequency time spectrogram of sensor at position 7 on the jet loop reactor,
Figure 11 shows the algorithm obtained by logistic regression on a test run in the jet loop reactor.

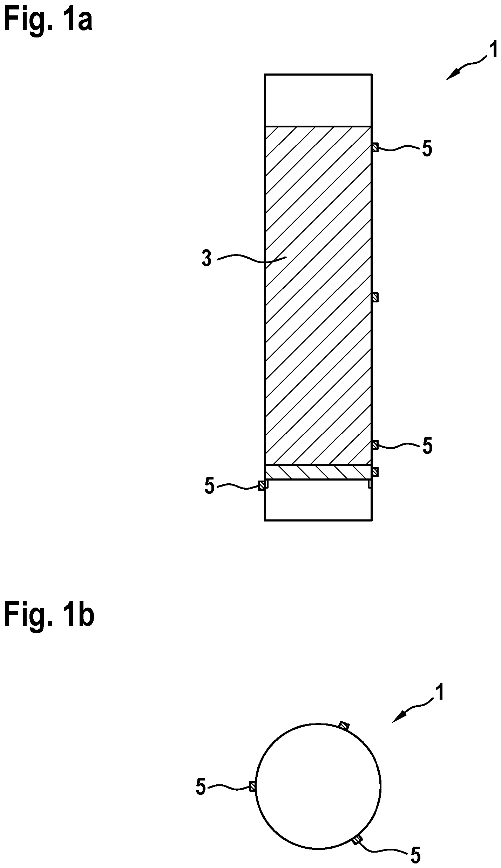

Figure 1a shows a column with packings and positions of sensors for determining process changes in longitudinal section and figure 1b shows the column in cross section.

For operating mass exchange processes with at least two different phases, for example distillations, evaporations, gas scrubbing, absorption processes or extractions, generally a column 1 is used. To achieve a good mixing of the different phases, generally internals are used. Such internals for example are packings 3.

For detecting process changes, for example changes in liquid load, fouling, or other process changes which result in changes in flow velocities or in the composition of the different phases, sensors 5 for measuring structure-borne sound, for example sensors for measuring acceleration, are attached to the outer surface of the column 1.

Preferably, the sensors 5 for measuring the structure-borne sound are placed at the elevation of internal support structures, the elevation of packing support grids, along any position along a structure or random packing bed and additionally at different positions along the circumference of a selected elevation along the packing.

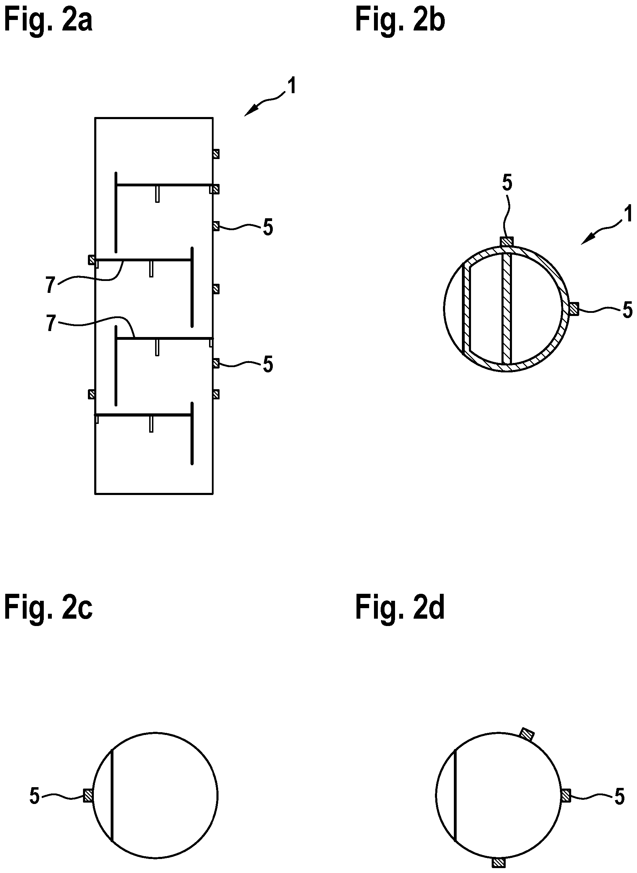

Figure 2a shows schematically a column with trays and the position of the sensors. Figures 2b, 2c and 2d show cross sections of the column with trays with different positions of sensors.

In difference to the column 1 of figure 1, the internals of the column 1 as shown in figure 2 comprises trays 7 instead of a packing 3. The trays 7 may be any suitable trays known to a skilled person, for example sieve trays, valve trays, tunnel trays, bubble trays, dual flow trays or any other type of trays. In the column, all trays may be of the same kind or different kinds of trays may be used. However, preferably, all trays are of the same kind.

Besides columns with only packings or only trays as internals, it is also possible to use columns which comprise trays and packings as internals.

In case of trays 7 as internals in the column, the sensors 5 for measuring the structure-borne sound, particularly the sensors for measuring acceleration, are placed close to the trays 7. Preferably, the the sensors 5 are placed in a range from 200 mm below the tray to 200 mm above the tray, more preferred in a range from 50 mm below the tray to 50 mm above the tray and particularly in a range from10 mm below to 10 mm above the tray. Particularly preferably, the sensors 5 are fixed on the support grid of the trays 7.

Additionally or alternatively, sensors 5 may be placed at the elevation of internal support structures and/or of tray support rings as shown in figure 2b, of tray downcomers as shown in figure 2c, at any position between two trays and at different positions along the circumference of a selected elevation between two trays as shown in figure 2d.

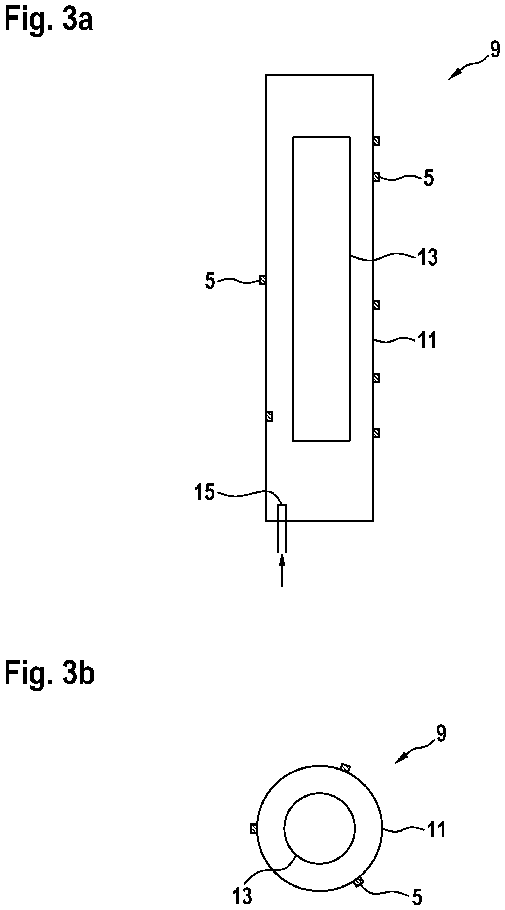

Further apparatuses in which a multi-phase flow is generated are for example reactors like jet-loop reactors. Such a jet-loop reactor is schematically shown in figure 3a in longitudinal section and in figure 3b in cross section.

A jet-loop reactor 9 generally comprises an outer shell 11 and an inner tube 13, which is placed centrally in the outer shell 11. During operation, a flow is generated for example by injecting a liquid and/or a gas through a nozzle 15. The multi-phase fluid in the reactor flows through the inner tube 13, flows around the upper edge of the inner tube 13 and in the opposite direction back to the lower edge of the inner tube 13 in the space between the inner tube 13 and the outer shell 11, or vice versa.

For determining process changes, it is preferred to place sensors for measuring structure borne sound at top and bottom of the loop reactor and at any position along the reactor. Additionally sensors can be placed at the circumference of a selected elevation along the reactor as exemplary shown in figure 3b.

Besides the columns and the jet-loop reactor shown here, the inventive process may be used in any other type of apparatus known to a skilled person, in which a multi-phase flow is generated or in which more than one phase flows.

### Examples

Example 1: Data obtained in a column with packing

For obtaining the data, a packed column was used with a column diameter of 0.5 m and a height of 1.6 m. The internals were structured packings and sensors 5 were placed at the bottom of the packed bed. The column was operated with water as liquid phase and with air for the vaporous phase at ambient pressure. The internal column loadings were described by the liquid loading wl and the vaporous loading factor F. Where wl is calculated by the liquid volume stream in cubic meter per hour divided by the column area in square meter. The F-Factor was calculated by the air volume stream in cubic meter per second divided by the column area in square meter and multiplied with the square root of the vapor density in kilogram per cubic meter.

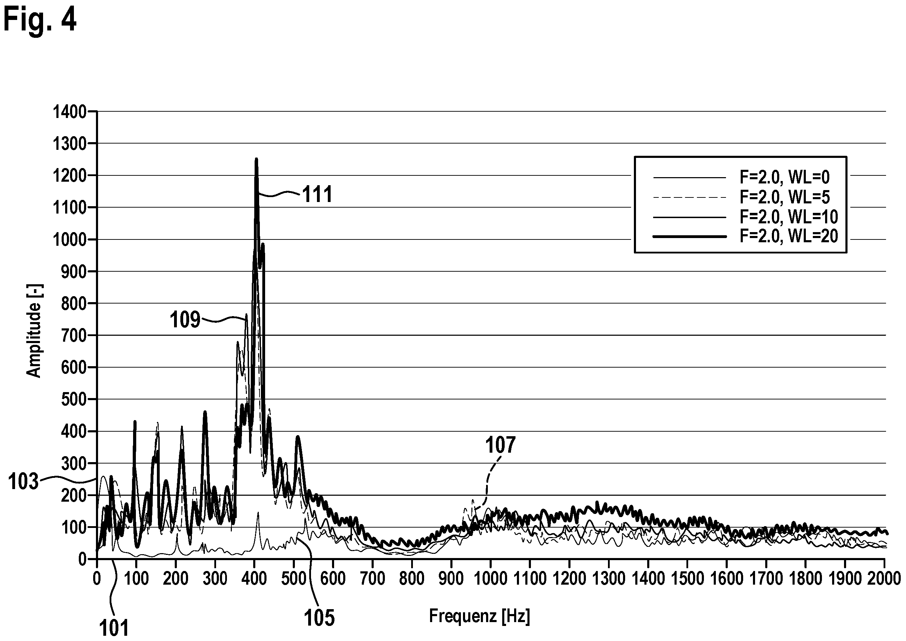

An example for signals obtained for different liquid loads at normal operation conditions is shown in figure 4.

Spectra obtained by measuring the structure-borne sound comprise amplitudes and frequencies. In the chart shown in figure 4, the frequency is plotted on the abscissa 101 and the amplitude on the ordinate 103. The spectra are calculated by FFT from the data obtained with the sensors 5.

Each line in the chart was obtained by averaging 20 spectra in steady state. A first average spectrum 105 was obtained at a liquid load wl of 0 m³/m²h and an F-factor of 2.0 Pa^{0,5}, A second average spectrum 107 was obtained at a liquid load wl of 5 m³/m²h and an F-factor of 2.0 Pa^{0,5}, a third average spectrum 109 was obtained at a liquid load wl of 10 m³/m²h and an F-factor of 2.0 Pa^{0,5} and a fourth average spectrum 111 was obtained at a liquid load wl of 20 m³/m²h and an F-factor of 2.0 Pa^{0,5}. The spectra for the different liquid loads differ particularly in a frequency range from 100 to 500 Hz.

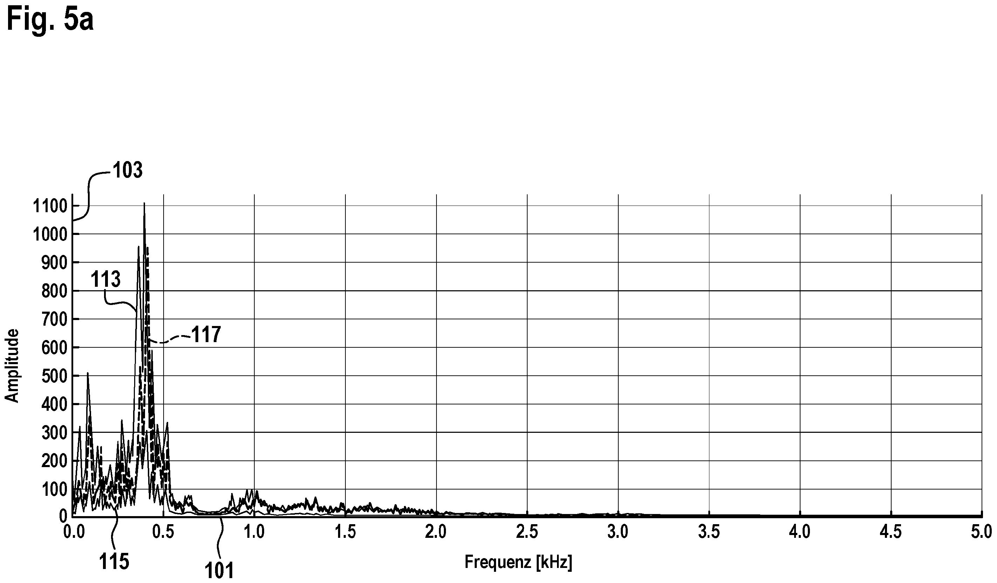

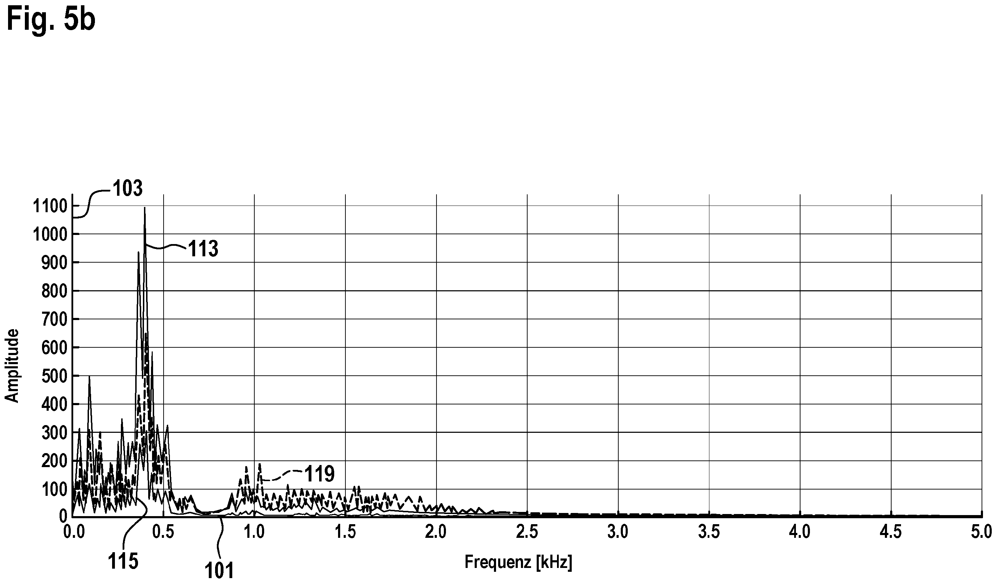

Figures 5a and 5b show spectra obtained in a packed column with constant liquid load but different F-factors compared to tolerance limits which were obtained by a machine learning via logistic regression with data obtained at the same liquid load but a different F-factor.

By machine learning, an upper tolerance limit 113 and a lower tolerance limit 115 were obtained. The training data for calculating the tolerance limits were obtained by measuring with a constant liquid load of 5 m³/m²h and an F-factor of 1.0 Pa^{0,5}.

Figure 5a shows a spectrum 117 with a constant liquid load wl of 5 m³/m²h and an F-factor of 1.5 Pa^{0,5}. As can be seen, the spectrum 117 lies within the tolerance limits.

Figure 5b shows a spectrum 119 with a constant liquid load wl of 5 m³/m²h and an F-factor of 2.0 Pa^{0,5}. Here, the spectrum 119 lies within the tolerance limits at frequencies below 800 Hz but at frequencies above 800 Hz, the spectrum 119 lies above the upper tolerance limit.

Thus, if process changes independent of the F-factor shall be identified, it is preferred to compare spectra with frequencies below 800 Hz. If all process changes, including the F-factor shall be identified, it is preferred to use spectra at frequencies above 800 Hz.

### Example 2: Data obtained in a column with trays

For obtaining the data, a column was used with a column diameter of 0.5 m and a height of 2.5 m. The internals were 4 valve trays which were uniformly distributed in the column. One sensor was placed at each support grid of the trays and one sensor on the shell between trays 2 and 3. The column was operated with air and water and a liquid load wl of 10 m³/m²h and a F-factor of 1 Pa^{0,5} at ambient pressure.

For testing, some of the openings of the second tray counted from bottom were blocked with PTFE-stripes, which were clamped under the moveable valve to block the area for the air flow.

During normal operation of the column, data were measured with the sensors and spectra were calculated by FFT. These data were used for training to get a frequency spectrum and also for training of machine learning via logistic regression (glm). The frequency spectrum leads to an upper tolerance limit 113 and a lower tolerance limit 115.

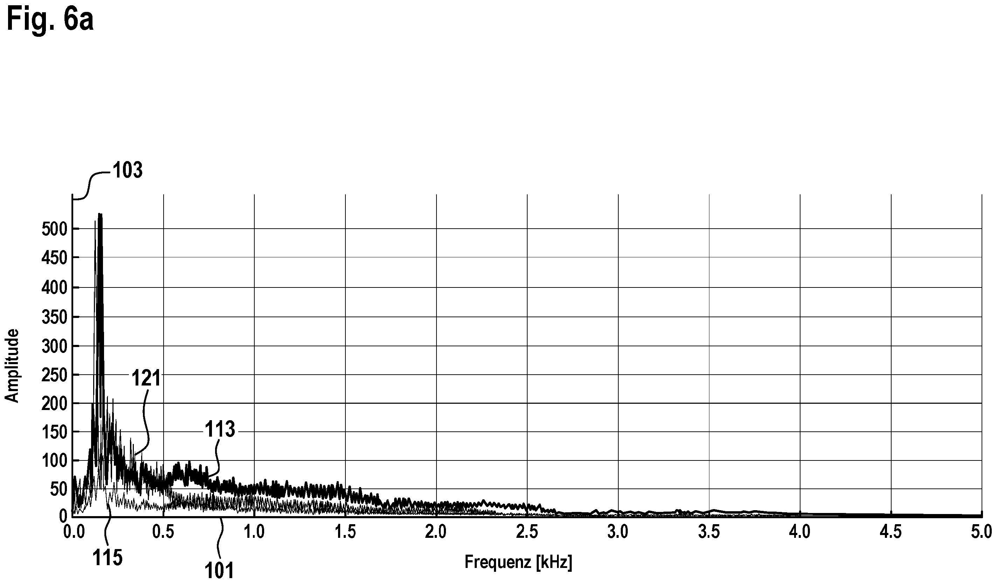

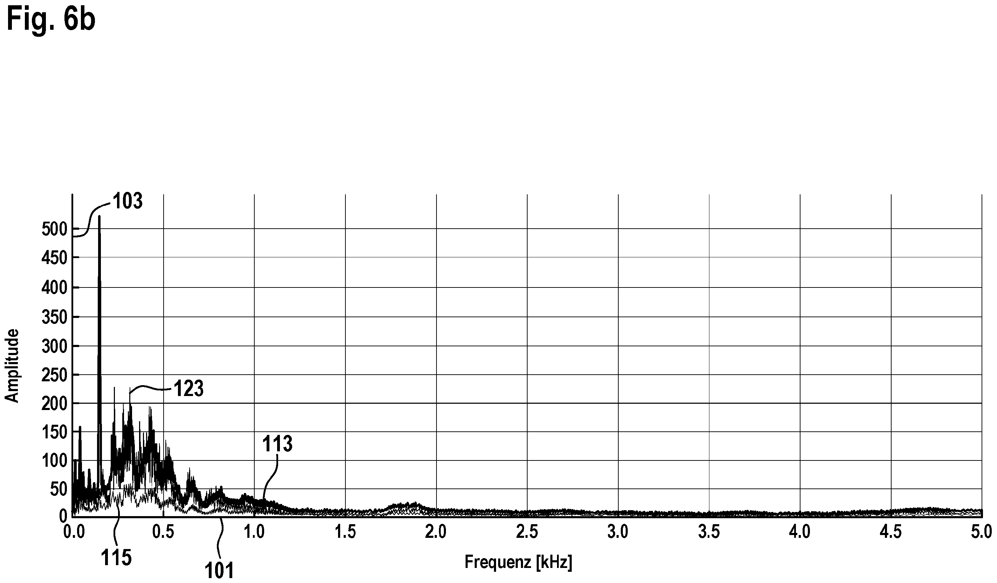

After blocking some of the openings, a spectrum 121 as shown in figure 6a was obtained from the data measured with the sensor placed on the support grid of the partially blocked tray, and a spectrum123 as shown in figure 6b was obtained by the sensor placed on the support grid of the tray directly below the partially blocked tray.

As clearly can be seen, the spectra obtained with blocked openings in the tray lay at least partly above the upper tolerance limit. Therefore, blocking of the openings clearly can be identified by the inventive process. Further, it can be seen that blocking does not only have an effect on the tray with the blocked openings but also on the tray below that tray. Therefore, if it is intended to only identify whether a tray in the column is at least partly blocked by fouling, it is not necessary to provide a sensor on the support grid of each tray. However, providing sensors on the support grids of each tray additionally allows for identifying the at least partially blocked tray.

Additionally, as sensor usually show different accuracy depending on inaccuracies during the production process of the sensor and on the location, the sensor is fixed on the column, all sensors show different patterns for fouling and no fouling. For this reason, it is necessary to obtain spectra for each sensor during normal operation and to compare obtained data during the process only with the data obtained from this sensor.

To avoid comparing measurements at equal loadings, the measurements at various vapor and liquid loadings were collected and used for training of machine learning via logistic regression.

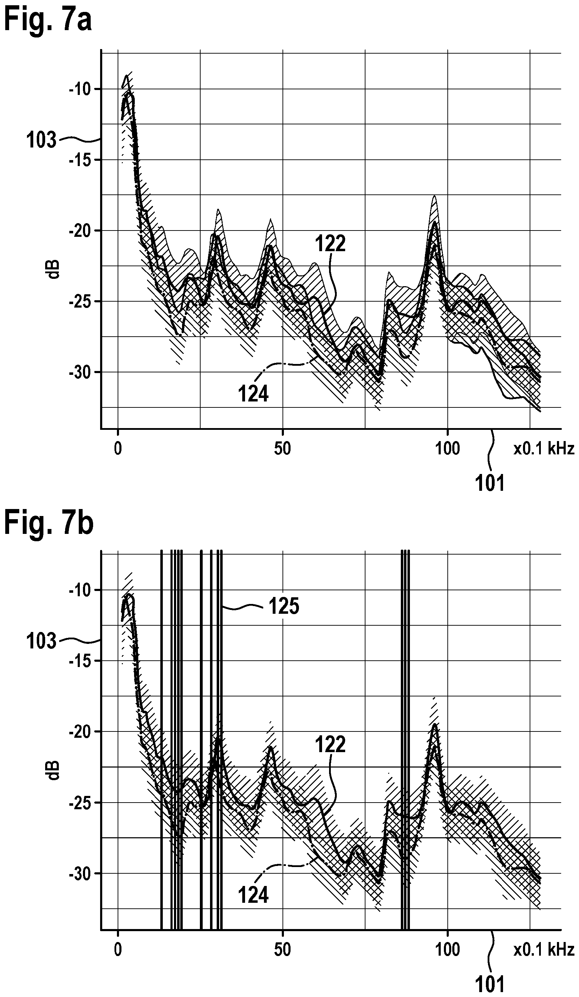

In Figure 7a the averaged spectra for tray 1 (the tray below the blocked tray) is shown. The frequency is plotted on the abscissa 101 and the scale of the amplitude (dB) on the ordinate 103. The upper curve 122 indicates the spectra for no fouling and the lower curve 124 the spectra for the fouling measurements. It can be clearly seen that there is a difference.

The most sensitive frequencies could be identified via variable importance of the glm model and are shown in figure 7b. These most important frequency channels are shown by lines 125 in figure 7b for the sensor on the tray below the blocked tray. Thus, for determining process changes during normal operation, it is preferred to particularly use the values measured at these most important frequency channels.

### Example 3: Data obtained in a jet-loop reactor

For obtaining the data, a jet-loop reactor working with air and water as two-phase flow was used. The jet-loop reactor had an outer shell with a diameter of 1 m and a height of 9 m. In the center of the outer shell, an inner tube with a diameter of 0.5 m is located. Seven sensors were installed from bottom to top on the outer shell with various distances between the sensors. Sensors 1 and 2 were installed in the top section, sensors 3 and 4 in the middle section and sensors 5, 6 and 7 in the bottom section of the reactor, within the height of the inner tube. The sensors were able to measure accelerations in all three dimensions.

For measuring, the loop was started and subsequently the liquid level in the reactor was reduced until the loop broke down.

The raw data obtained were analyzed before and after FFT and additionally machine learning via glm was carried out with the raw data after FFT.

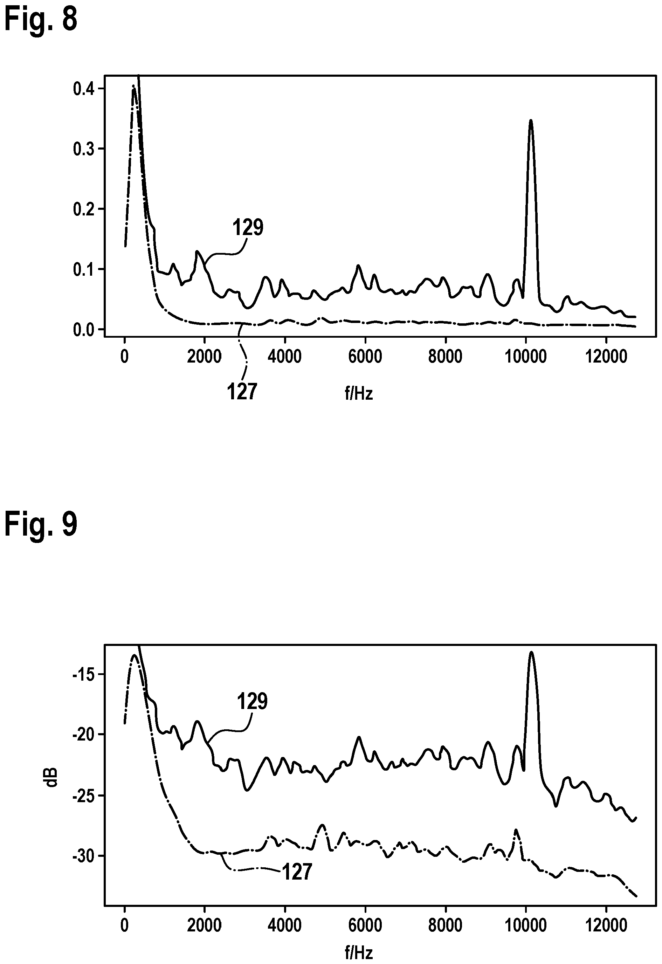

The averaged frequency time spectrograms for sensor 7, which was found to be the most sensitive one, obtained after FFT are shown in figures 8 and 9. In figure 8, the ordinate shows the amplitude and in figure 9, the ordinate shows the scale of the amplitude in dB.

The lower line 127 in both graphs shows the averaged spectrum at normal operation and the upper line 129 the averaged spectrum after liquid breakdown. Differences could be seen clearly.

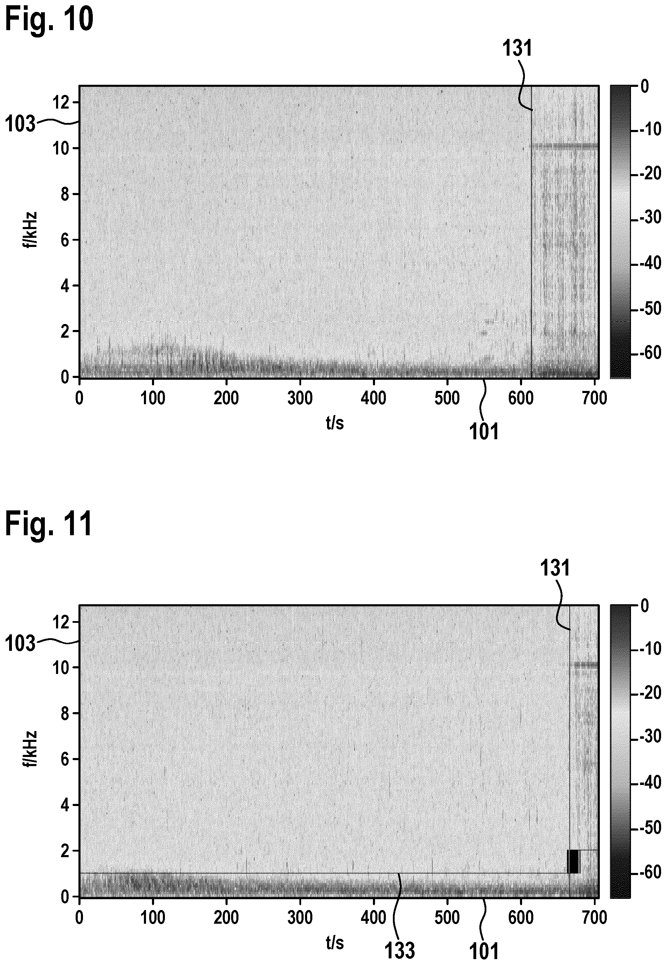

Figure 10 shows a frequency time spectrogram of the sensor at position 7.

On the abscissa 101 the time is shown and on the ordinate the frequencies. The height of the amplitude is given by different intensity. The darker the dots are, the higher is the amplitude.

Vertical black line 131 shows the time, when the loop collapsed. As clearly can be seen, after collapse of the loop, the amplitude rises remarkably for all frequencies.

With the method of classification via logistic regression for the measurements of a first test run, single models for each sensor and joint models sensors 4, 5 and 7 were built and trained. With the found algorithm, the pint of loop break down should be identified. This result can be seen if figure 11.

Here, line 133 shows the output of the machine learning model, where value 1 shows normal behavior and value 2 shows that the loop collapsed. Values between 1 and 2 show that something happened in the system. It can be seen that the value of the algorithm applied on the second test run shows 1 as long the loop is circulating. In the timeframe where the loop collapsed, shown by line 135, the result of the algorithm starts oscillation and ends within a short period in the value 2 which indicates that the loop collapsed.

## Claims

1. A process for determining process changes in a multiple-phase flow in an apparatus, comprising:
(a) obtaining data by capturing measured values by measuring structure-borne sound in the apparatus at different positions on an outer shell of the apparatus and optionally processing the measured values;
(b) comparing the data obtained in step (a) with stored data or feeding the data obtained in step (a) into a machine learning classification method which was taught with data obtained by capturing measured values by measuring the structure-borne sound and optionally processing the measured values and connected operation conditions; and
(c) providing a signal, if a deviation between the data obtained in step (a) and the stored data exceeds a predefined threshold value or if a process change is detected by the machine learning classification method.

2. The process according to claim 1, wherein sensors for measuring the structure-borne sound are placed at different positions on the outer shell of the apparatus.

3. The process according to claim 1 or 2, wherein acceleration sensors which are able to measure accelerations in all three dimensions are used for measuring the structure-borne sound.

4. The process according to any of claims 1 to 3, wherein the data obtained in step (a) are amplitudes and frequencies.

5. The process according to any of claims 1 to 4, wherein the stored data are data obtained during regular operation of the apparatus.

6. The process according to any of claims 1 to 5, wherein data obtained in step (a) and the stored data are frequency time spectrograms determined by Fast Fourier transformation of the measured values.

7. The process according to any of claims 1 to 6, wherein the stored data are average values of at least two measurements.

8. The process according to any of claims 1 to 7, wherein the data obtained in step (a) are average values of at least two measurements.

9. The process according to any of claims 1 to 8, wherein the apparatus is a column, a jet loop reactor, a flash drum, a condenser, a reboiler, a pump.

10. The process according to any of claims 1 to 9, wherein depending on the kind and/or magnitude of deviation the kind of process change is determined.

11. The process according to any of claims 1 to 10, wherein the process changes are caused by fouling, blocking of valves or openings, variations in the amount of one phase in the two-phase flow and/or in the amount of the two-phase flow.

12. The process according to claim 10 or 11, wherein depending on the kind of process change measures are taken.

13. The process according to claim 12, wherein measures taken are increasing or reducing feed streams, shutting down the process, increasing or reducing temperature or pressure in the apparatus or restart the process.

14. The process according to any of claims 1 to 13, wherein the multiple-phase flow is a two-phase flow comprising a gas phase and a liquid phase.

15. The process according to any of claims 1 to 14, wherein the multiple-phase flow is a two-phase flow comprising a liquid phase and a solids phase.
